# EUROPÄISCHE PATENTSCHRIFT

(11) **EP 2 452 813 B1**
(45) Veröffentlichungstag und Bekanntmachung des Hinweises auf die Patenterteilung: **27.01.2016**
(21) Anmeldenummer: 11189239.4
(22) Anmeldetag: 15.11.2011
(51) Int. Cl.: B32B 1/00, B32B 5/24, B32B 7/12, B32B 27/04, B32B 27/18

(54) **Vliesbeschichtetes Formteil mit verminderter Monomerenemission, Verwendung eines solchen Formteils sowie Verfahren zu dessen Herstellung**
Moulded part coated with non-woven fabric and having a reduced monomer emission, use of such a moulded part and method for producing same
Pièce de formage revêtue d'un tissu non-tissé et ayant une émission en monomère réduite, utilisation d'une telle pièce de formage ainsi que son procédé de fabrication

(30) Priorität: 15.11.2010 DE 102010060568
(43) Veröffentlichungstag der Anmeldung: 16.05.2012
(73) Patentinhaber: Carcoustics TechConsult GmbH, 51381 Leverkusen (DE)
(72) Erfinder: Sviridenko, Andreas, 41540 Dormagen (DE); Brüning, Hermann-Josef, 51379 Leverkusen (DE); Czerny, Rudolf, 53913 Swisttal (DE); Daub, Reiner, 38524 Sassenburg (DE)
(74) Vertreter: Patentanwälte Bauer Vorberg Kayser

(56) Entgegenhaltungen:
- US-A1- 2007 190 876
- US-A1- 2009 305 595

## Beschreibung

Die Erfindung betrifft ein vliesbeschichtetes Formteil mit verminderter Monomerenemission, ein Verfahren zur Herstellung solcher Formteile, insbesondere solcher aus schaumstoffartigen oder faserhaltigen Materialien sowie die Verwendung des vliesbeschichteten Formteils als schallabsorbierendes Bauteil in Kraftfahrzeugen z.B. zur Verkleidung von Motorräumen oder Getriebe- bzw. Antriebstunneln.

Bekanntlich werden Formaldehyd-, Phenol- und Melaminharze in großem Umfang, beispielsweise für die Herstellung von Verbundwerkstoffen, wie Dämmstoffen oder Holzwerkstoffe, eingesetzt. Im Allgemeinen werden diese Harze in der Hitze ausgehärtet, wobei Formaldehyd, Phenole oder weitere Aldehyde, insbesondere bei den Harnstoff-Formaldehyd-Harzen FU (Formaldehyd-Urea), MUF (Melamin-Urea-Formaldehyd) und MUPF (Melamin-Urea-Phenol-Formaldehyd), freigesetzt werden. Formaldehyd ist in der Gefahrstoffverordnung bzw. MAK- Liste als gesundheitsgefährdend eingestuft und die Formaldehydemission ist daher so gering wie möglich zu halten.

Es gibt bereits zahlreiche Methoden zur Verringerung der Formaldehydemission. So beschreibt die EP-A-341 569 ein Verfahren zur Herstellung von Verbundwerkstoffen mit verringerter Formaldehydemission, wobei man Werkstoffteile mit einem Formaldehydharz imprägniert, einen Formteil herstellt und dieses dann in Gegenwart eines Formaldehydfängers härtet. Der Formaldehydfänger liegt dabei in pulverförmiger oder geprillter Form vor und ist mit einem wasserbeständigen oder wasserundurchlässigen Überzug versehen, dadurch lösen sich die Partikel erst in der Endphase des Aushärtungsprozesses auf, so dass die nachteilige Wirkung von vorzeitig zersetztem Formaldehydfänger vermieden wird. Nachteilig ist dabei aber das Erfordernis eines Überzugs.

DE19522951A1 beschreibt die Verwendung von Harnstoff als Formaldehydfänger der ohne eine Beschichtung eingesetzt werden kann, dieser hat jedoch den Nachteil einer hohen Geruchsbelastung, die die Verwendung der erhaltenen Formteile im Innenbereich von Kraftfahrzeugen ausschließt.

EP 0451535 A1 stellt sich die Aufgabe, ein rationelles Verfahren zur Herstellung von Formteilen aus duroplastischem Melaminharzschaumstoff bereitzustellen. Diese Aufgabe wird gelöst, indem ein Formteil-Rohling aus Melaminharzschaumstoff mit einem wärmeaushärtenden Bindemittel versehen wird und anschließend eine Verpressung unter Wärmeeinwirkung durchgeführt wird.

Der vorliegenden Erfindung liegt daher die Aufgabe zugrunde, emissionsarme vliesbeschichtete Formteile zur Verfügung zu stellen, und ein Verfahren zur Herstellung von Formteilen zu schaffen, bei dem in einfacher Weise die Monomerenemission, vorzugsweise die Formaldehydemission, reduziert werden kann, ohne die Material- und Anwendungseigenschaften der erhaltenen Verbundwerkstoffe zu beeinträchtigen. Dabei soll die Monomeremission vorzugsweise sowohl während der Herstellung der Formteile als auch während ihres späteren bestimmungsgemäßen Gebrauchs gegenüber konventionellen vliesbeschichteten Formteilen vermindert sein.

Die Aufgabe wird gelöst durch ein vliesbeschichtetes Formteil gemäß Anspruch 1.

Die Erfindung betrifft zudem ein Verfahren zur Herstellung eines vliesbeschichteten Formteils gemäß Anspruch 5.

Es wurde überraschenderweise gefunden, dass die Verwendung von Hot-Melt-Klebepulvern (D) in Verbindung mit Monomerenfängern (E) zu einer deutlichen Verminderung der Monomerenabgabe, insbesondere der Abgabe von Formaldehyd, an die Umwelt führt. Außerdem wird auch die im Zusammenhang mit dem Stand der Technik beschriebene Geruchsbelastung durch die eingesetzten Monomerenfänger (E) vermindert.

Die Herstellung der erfindungsgemäßen Formteile erfolgt in üblicher Weise, wie z.B. in EP 0451535 A1 beschrieben.

Das vliesbeschichtete Formteil gemäß der vorliegenden Erfindung besitzt einen Kern (A), der aus Schaumstoffen oder aus faserigen Materialien, vorzugsweise aus heterogenen Fasermischungen oder Mischungen von Schaumstoffen und faserigen Materialien besteht. Heterogene Fasermischungen können im Hinblick auf die Faserlängen und/oder auf die Fasermaterialien heterogen sein.

Schaumstoffe sind künstlich hergestellte Stoffe mit zelliger Struktur und niedriger Dichte. Es eignen sich fast alle Kunststoffe zum Schäumen. Beispielsweise seien Polyolefin-Schäume, wie Polypropylene- oder Polyethylenschäume, Polystyrol-Schäume, Polyethyleneterephthalat-Schäume, Polyurethanschaumstoff, Melaminharzschaumstoff oder einige Biopolymerschäume genannt. Im Zusammenhang mit der vorliegenden Erfindung werden Polyurethanschaumstoffe und Melaminharzschaumstoffe bevorzugt eingesetzt. Als Melaminharzschaumstoff kann beispielsweise solcher verwandt werden, wie er unter dem Handelsnamen Basotect^{®} von der Firma BASF bekannt ist.

Die Schäume werden üblicherweise vor dem Verpressen unter Wärmeeinwirkung mit dem wärmeaushärtbaren Bindemittel bestrichen, besprüht, imprägniert oder getränkt. Je nach Art des Schaumstoffs und der Menge an eingesetztem wärmeaushärtbaren Bindemittel (B) entstehen bei dem erfindungsgemäßen Verfahren Formteile mit unterschiedlichen physikalischen und chemischen Eigenschaften wie z.B. Elastizität, Härte, Schlagzähigkeit, Entflammbarkeit, Temperatur oder Lösungsmittelbeständigkeit, Wasserabweisung, Ölabweisung, etc.

Wird eine hohe Durchsetzung des gesamten Kerns (A) mit dem wärmeaushärtbaren Bindemittel (B) gewünscht, so werden vorzugsweise offenzellige Schäume, mit bis zu 100% offenen Poren, verwendet, die vorzugsweise mit einer Lösung des Bindemittels (B) imprägniert oder getränkt werden.

Soll vorwiegend die Oberfläche des Kerns mit dem wärmeaushärtbaren Bindemittel (B) versehen werden, so bietet sich die Verwendung geschlossenzelliger Schaumstoffe als Kern (A) an, die vorzugsweise mit dem wärmeaushärtbaren Bindemittel (B) bestrichen, besprüht, bestäubt oder beflockt werden. Aber auch offenzellige oder gemischtzellige Schaumstoffe können im Rahmen des erfindungsgemäßen Verfahrens verarbeitet werden.

Faserige Materialien sind Verbunde aus einzelnen Fasern, d.h. aus im Verhältnis zur Länge dünnen und flexiblen Gebilden, die aus unterschiedlichen Materialien bestehen können. Die verwendeten Fasern sind beispielsweise ausgewählt aus
- Naturfasern, beispielsweise Samenfasern wie Baumwolle und Kapok, Bastfasern wie Bambusfaser, Brennnessel, Fasernessel, Hanffaser, Jute, Leinen und Ramie, Hartfasern wie Holzfasern, Blattfasern wie Sisal und Abacá, Fruchtfasern wie Kokos, Fasern tierischen Ursprungs wie Schurwolle, grobe Tierhaare wie Ziegenhaar, Rinderhaar und Rosshaar (HS),
- Mineralfasern (Fasern ohne organisch gebundenen Kohlenstoff) wie Asbest und Fasergips,
- Chemiefasern, beispielsweise zellulosische Fasern wie Viskose, Modal, Lyocell, Cupro, Acetat-Fasern, Triacetat, Cellulon, Gummifasern, Fasern aus synthetischen Polymeren wie Polyestern, z.B. Polyethylenterephthalat (PET), Polyamiden (PA), z.B. *Nylon, Perlon, Dederon*; Polyimiden (PI); Polyamidimiden (PAI), z.B. *Kermel*; Polyphenylensulfiden (PPS), z.B. *Procon, Torcon, Nexylen* etc., Aramid, z.B. *Kevlar*, *Nomex, Twaron*; Polyacrylnitril (PAN), z.B. *Dralon, Orlon* etc., Polytetrafluorethylen (PTFE), z.B. *Teflon, Toyoflon, Profilen, Rastex*; Polyethylen (PE), z.B. Dyneema, Polypropylen (PP), Polycolon, Polyvinylchlorid (CLF/PVC), Polyurethan (EL) als Elastomer (Elasthan bzw. Spandex), z.B. Lycra und Dorlastan,
- Industriell erzeugte anorganische Fasern wie Glasfasern (GF), Basaltfasern, Kohlenstofffasern (CF), Metallfasern (MTF), Keramikfasern und Nanotubefasern.

Erfindungsgemäß werden insbesondere Cellulosefasern, Holzfasern, Baumwoll- oder Kunstfasern verwendet, die beispielsweise durch Textilrecycling erhältlich sind.

Auch die faserigen Materialien werden üblicherweise vor dem Verpressen mit dem wärmeaushärtbaren Bindemittel behandelt. Diese Behandlung kann durch Bestreichen, Besprühen, Bestäuben, Beflocken, Imprägnieren oder Tränken erfolgen. Je nach Art der verwendeten Fasern, deren Längenverteilung und der Menge an eingesetztem wärmeaushärtbaren Bindemittel (B), entstehen bei dem erfindungsgemäßen Verfahren Formteile mit unterschiedlichen physikalischen und chemischen Eigenschaften wie z.B. Elastizität, Härte, Schlagzähigkeit, Schwerentflammbarkeit, Lösungsmittelbeständigkeit, etc. Wenn eine hohe Durchsetzung des gesamten Kerns (A) mit dem Bindemittel erwünscht ist, so erfolgt die Behandlung der faserigen Materialien durch Tränken mit einer Lösung des wärmeaushärtbaren Bindemittels. Soll vorwiegend die Oberfläche des Kerns mit dem wärmeaushärtbaren Bindemittel (B) versehen werden, so wird das wärmeaushärtbaren Bindemittel (B) vorzugsweise auf die faserigen Materialien aufgesprüht, aufgestrichen oder aufgestäubt oder aufgeflockt.

Wird im Zusammenhang mit dem erfindungsgemäßen Formteil von einem wärmeausgehärteten Bindemittel (B) gesprochen, so bezeichnet dieses, das in dem erfindungsgemäßen Verfahren verwendete wärmeaushärtbare Bindemittel, welches - wenigstens teilweise - einem thermischen Aushärtungsschritt unterzogen wurde.

Wärmehärtbare Bindemittel (B), die gemäß der vorliegenden Erfindung eingesetzt werden können sind Polymere, die beim Erhitzen duroplastisch vernetzen, d.h. über chemische Hauptvalenzbindungen dreidimensional fest vernetzt werden und somit nach ihrer Aushärtung nicht mehr verformt werden können. Vorzugsweise sind die wärmehärtbaren Bindemittel (B) ausgewählt aus Phenolharzen, Harnstoffharze, Formaldehydharze, Melaminharze, Epoxidharze und Mischungen dieser.

Phenolharze sind im Zusammenhang mit der vorliegenden Erfindung Kunstharze, die man durch die Synthese von Phenolen mit Aldehyden erhält. Durch eine elektrophile Substitution werden hier bis zu drei Wasserstoff-Atome des Phenol-Moleküls durch jeweils eine -CH₂-OH-Gruppe ersetzt. Durch Abspaltung von Wasser kondensieren diese polyfunktionellen Phenol-Derivate zu Vorkondensaten. Je nach gewünschtem Ergebnis werden die Vorkondensate dann mit sauren oder basischen Kondensationsmitteln versetzt. In saurer Umgebung bilden sich aus dem Vorkondensat Phenolalkohole (Methylol), die sich durch Methylenbrücken zu linearen Kettenmolekülen, so genannte Novolake zusammenfügen. Novolake weisen einen sehr hohen Vernetzungsgrad auf, sind aber noch schmelzbar. Zusammen mit Formaldehydspendern wie Hexamethylentetramin härten Novolake bei Temperaturen oberhalb von 120 °C zu unschmelzbaren, duroplastischen Massen aus.

Mit basischen Kondensationsmitteln bilden sich dagegen zähflüssige Harze mit niedriger Molekülmasse, die Resole.

Werden die Vorkondensate unter hohem Druck erhitzt, erhält man unter weiterer Abspaltung von Wasser und Formaldehyd-Molekülen dreidimensionale Molekülnetze.

Harnstoffharze sind Aminoplaste (Kunststoffe), welche als Kondensationsprodukte aus Harnstoff (bzw. Harnstoffderivaten) und Aldehyden (insbesondere Formaldehyd) hergestellt und chemisch bzw. thermisch ausgehärtet werden können.

Die Harnstoff-Formaldehyd-Harze werden kurz als UF-Harze (von engl. *urea* = Harnstoff) bezeichnet.

Als Formaldehydharz kommen dabei im Handel erhältliche Produkte zur Anwendung, z. B. die Leime UF, MUF, MUPF und MF; die Kaurit-, Kauresin- und Kauramin-Leime der BASF AG; melaminverstärkte Harnstoff-Formaldehydharze, die Harze L62, L2590 und L168 der Firma Montedison und das Harz des Typs 2503 der Firma Bakelite. Besonders bevorzugt werden Melaminharze, wie das unter dem Handelsnamen Ukadan MH von der Firma Schill + Seilacher bekannte Melaminharz, oder Phenolharze, wie das unter dem Handelsnamen Bakelite HW 2513 von der Firma Rüttgerswerke vertriebene Phenolharz, verwendet werden.

Der Anteil des wärmeaushärtbaren Bindemittels (B) beträgt 5 bis 60 Gew.-%, vorzugsweise 10 bis 50 Gew.-%, besonders bevorzugt zwischen 20 bis 35 Gew.-%, bezogen auf den Kern (A) umfassend Schaumstoff oder ein fasriges Material und das wärmehärtbare Bindemittel (B).

Gemäß der vorliegenden Erfindung liegen die Bindemittel (B) in flüssiger oder schaumiger Form vor. Dazu müssen die teilweise festen Bindemittel (B) in einem geeigneten Lösungsmittel, vorzugsweise in Wasser, gelöst oder dispergiert werden.

Die erfindungsgemäßen Formteile weisen zumindest auf einer Seite, vorzugsweise auf zwei gegenüberliegenden Seiten einen Überzug aus einem Vliesstoff auf. In einer besonders bevorzugten Ausführungsform der Erfindung ist die gesamte Oberfläche des Formteils mit einem Vliesstoffschicht (C) überzogen.

Vliesstoffe sind textiles Flächengebilde aus einzelnen lose zusammenliegenden Fasern, welche noch nicht miteinander verbunden sind. Die Festigkeit eines Vlieses beruht nur auf der fasereigenen Haftung, kann aber durch Aufarbeitung beeinflusst werden. Damit man das Vlies verarbeiten und benutzen kann, muss es verfestigt werden, wofür verschiedene Methoden angewandt werden können. Erst ein verfestigtes Vlies ist als Vliesstoff zu bezeichnen. Im Zusammenhang mit der vorliegenden Erfindung bezeichnen die Begriffe *Vlies* und *Vliesstoff* jeweils das verfestigte Vlies. Für die Herstellung der erfindungsgemäßen Formteile können sowohl Wirrfaser-Vliesstoffe als auch faserorientierte Vliesstoffe verwendet werden. Durch gezielte Auswahl der verwendeten Faserarten und deren Ursprung kann der Vliesstoff und damit auch das mit dem Vliesstoff versehene Formteil an die entsprechenden Anforderungen der jeweiligen Anwendung angepasst werden. Geeignete Vliesstoffe können aus:
- mineralischen Fasern, z. B. Glas, Mineralwolle, Basalt;
- Tierischen Fasern, z. B. Seide, Wolle;
- pflanzliche Fasern, z. B. Baumwolle;
- chemische Fasern, aus natürlichen Polymeren, z. B. Cellulose;
- chemische Fasern aus synthetischen Polymeren, wie Polyamid, z.B. PA 6.6 - Markenbezeichnung *Nylon,* PA 6.0 - Markenbezeichnung *Perlon;* Polyester wie z.B PET (Polyethylenterephthalat) und PBT (Polybutylenterephthalat); PVC (Polyvinylchlorid); PP (Polypropylen); PE (Polyethylen); PPS (Polyphenylensulfid); PAN (Polyacrylnitril); PI (Polyimid); PTFE (Polytetraflourethylen, *Teflon*); Aramide, wie z.B. meta-Aramid, Markenbezeichnung z. B. *Nomex,* para-Aramid, Markenbezeichnung z. B. *Kevlar;* Polyamidimid (*Kermel*), z. B. MF; Melaminharzfaser

Der Vliesstoff (C) ist mit dem Kern (A) mit einem thermoplastischen Hot-Melt-Klebepulver (D) flächig verbunden.

Als Hot-Melt-Klebepulver (D) werden bei Raumtemperatur rieselfähige Polymermischungen umfassend
(i) nichtvernetzende thermoplastische Füllkörper, z.B. polyolefine Hotmelts wie Polyethylen (PE), Polypropylen (PP), Polystyrol (PS) Co-Polyester, CoPolyamide oder Co-Polyurethane und
(ii) duroplastisch vernetzende Komponenten, wie z.B. Phenolharze, Melaminharze und Epoxidharze verwendet.

Das Hot-Melt-Klebepulver dient einerseits dazu, das Vlies (C) mit dem Kern (A) dauerhaft zu verbinden und andererseits dazu, das Vlies (C) selbst duroplastisch zu verstärken.

Bei dem erfindungsgemäßen Verfahren zur Herstellung des erfindungsgemäßen Formteils wird das Hot-Melt-Klebepulver (D) auf das Vlies (C) und/oder auf den Kern (A), vorzugsweise jedoch auf das Vlies (C) aufgestreut. Die aufgebrachte Menge des Hot-Melt-Klebepulvers (D) liegt je nach dessen Zusammensetzung zwischen 10 g/m² und 200 g/m², vorzugsweise zwischen 15 g/m² und 150 g/m², besonders bevorzugt zwischen 50 g/m² und 100 g/m²).

Wird das Hot-Melt-Klebepulver ausschließlich als Klebeschicht eingesetzt, so genügen Mengen zwischen 15 und 50 g/m², sobald jedoch auch eine Verstärkung des Vliesstoffs erwünscht ist, sind höhere Mengen, zwischen 50 und 200 g/m² aufzubringen.

Zum Auflaminieren des Vliesstoffs (C) auf den Kern (A) wird der mit dem Hot-Melt-Klebepulver (D) bestreute Vliesstoff (C) auf den mit dem wärmeaushärtbaren Bindemittel (B) versehenen Kern (A) aufgelegt und anschließend unter Wärmeeinwirkung verpresst. Die Temperatur beim Verpressen ist so zu wählen, dass das Hot-Melt-Klebepulver (D) über seine Schmelztemperatur hinaus erwärmt und in einen fließfähigen Zustand gebracht wird und zugleich eine duoplastische Vernetzung des wärmeaushärtbaren Bindemittels (B) und der duroplastischen Bestandteile des Hot-Melt-Klebepulvers (D) gewährleistet ist. Die verwendeten Temperaturen liegen erfindungsgemäß üblicherweise zwischen 100 und 250°C, vorzugsweise zwischen 150 und 220°C, besonders bevorzugt zwischen 180 und 210°C.

Die Verweilzeiten in der Presse liegen erfindungsgemäß zwischen 20 und 300 Sekunden, bevorzugt zwischen 50 und 240 Sekunden besonders bevorzugt zwischen 60 und 180 Sekunden.

Zur Kontrolle der Vollständigkeit der Verklebung des auflaminierten Vliesstoffs (C) und/oder für einen einfachen Nachweis, dass es sich bei einem Formteil um ein gemäß des erfindungsgemäßen Verfahrens hergestelltes Teil handelt, kann dem Hot-Melt-Klebepulver ein Fluoreszenzmarker beigemischt werden. Geeignete Fluoreszenzmarker sind im Stand der Technik beschrieben.

Im Zusammenhang mit der vorliegenden Erfindung vermindert die duroplastische Vernetzung des Hot-Melt-Klebepulvers an der Oberfläche des Formkörpers das Austreten von flüchtigen Bestandteilen aus dem Kern (A), wie beispielsweise Zersetzungsprodukten des Monomerenfängers (E).

Um eine Abgabe der bei der duroplastischen Vernetzung freiwerdenden Monomere, insbesondere von Aldehyden, wie Formaldehyd, Acetaldehyd oder Propionaldehyd, oder von Phenolen zu vermeiden, wird zwischen dem Kern (A) und dem Vliesstoff (C) ein Monomerenfänger (E) aufgebracht.

Monomerenfänger (E) sind reaktive Moleküle, die mit den freiwerdenden Monomeren kovalente Bindungen eingehen können und dadurch nichtflüchtige Addukte bilden. Geeignete Monomerenfänger (E) sind beispielsweise ausgewählt aus der Gruppe, bestehend aus Melamin, Dicyandiamid, Thioharnstoff, Dibutylthioharnstoff, Ammoniumcarbonat, Polyacrylsäureamide, Guanidin, Carbamaten mit freien Amidfunktionen, Phenolen, Resorcin oder Diphenylmethandiisocyanat und Harnstoff. Allgemein wird die Verwendung von Stickstoffhaltigen funktionellen Mono- und Polymeren sowie mehrwertigen Alkoholen bevorzugt.

Da der Monomerenfänger in pulvriger Form verarbeitet / zugesetzt werden soll, hat es sich bewährt, die vorgenannten aktiven Moleküle, die in der Regel in flüssiger Form vorliegen, auf ein festes inertes Trägermaterial aufzubringen, bevorzugt an dieses anzuheften. Als Trägermaterial haben sich ggf. synthetisch hergestellte anorganische Materialen auf Siliziumbasis besonders bewährt, insbesondere solche auf Basis von oberflächenmodifizierten Sauerstoffhaltigen Siliziumverbindungen.

Besonders bevorzugt wird das Produkt Kappafix T4/438 der Fa. Kapp-Chemie GmbH & Co. KG eingesetzt, welches in pulvriger Form mit definierter Korngrößenverteilung vorliegt und dem Hot-Melt-Klebepulver z.B. unmittelbar vor dessen Verarbeitung problemlos beigemischt werden kann.

In einer bevorzugten erfindungsgemäßen Ausführungsform wird der Monomerenfänger (E) in fester feinteiliger Form mit dem Hot-Melt-Klebepulver (D) gemischt und auf den Kern (A) oder den Vliesstoff (C) aufgestäubt. Durch diese Verfahrensweise befindet sich der Monomerenfänger (E) während des thermischen Verpressens zwischen dem Kern (A) und dem Vliesstoff (C) und kann somit mit den aus dem Bindemittel (B) und ggf. den aus dem duroplastischen Bestandteil des Hot-Melt-Klebepulvers (D) freiwerdenden Monomeren Addukte bilden.

Außerdem ist in der Vliesstoffschicht (C) die Temperatur beim Härten in einer Heizpresse am höchsten, so dass die für die Wirksamkeit des Monomerenfängers (E) erforderliche Zersetzung sichergestellt ist.

Die Menge des eingesetzten Monomerenfängers (E) wird an das freiwerdende Monomerenvolumen angepasst. Die dem Hot-Melt-Klebepulver (D) zugesetzte Menge des Monomerenfängers (E) liegt, in Abhängigkeit von der Art des Monomerenfängers (E) zwischen 0,01 bis 10 Gew.-%, vorzugsweise zwischen 0,1 bis 5 Gew.-%, bezogen auf die eingesetzte Mischung aus Hot-Melt-Klebepulver (D) und Monomerenfänger (E).

Unter "feinteilig" im Sinne der vorliegenden Erfindung sind insbesondere Teilchen mit einer Größe im Bereich von etwa 0,01 mm bis 1,0 mm, insbesondere etwa 0,2 mm bis 0,6 mm, zu verstehen.

Die aus dem erfindungsgemäßen Verfahren resultierenden vliesbeschichteten Formteile umfassen daher, in Abhängigkeit von der während des Verpressens freigewordenen Monomerenmenge, nicht abreagierten Monomerfänger (E) und die Addukte, die aus dem Monomerfänger (E) und Monomer gebildet wurden. Sowohl der nicht abreagierte Monomerenfänger (E) als auch die gebildeten Addukte befinden sich vorwiegend zwischen der Vliesstoffschicht (C) und dem Kern (A). Dies hat den Vorteil, dass auch zu einem späteren Zeitpunkt austretendes Monomer, welches beispielsweise aus einem Schaumstoffkern (A) diffundiert, noch mit dem vorhandenen Monomerenfänger (E) abreagieren kann und somit nicht in die Umwelt gelangt.

In einer weiteren erfindungsgemäßen Ausführungsform wird auch das Bindemittel (B) vor dem Aufbringen auf den Kern (A) mit einem geeigneten Monomerenfänger (E) versetzt. Dieser im Kern (A) befindliche Monomerenfänger (A) sorgt dafür, dass die während des thermischen Verpressens freigesetzten Monomere bereits im Kern zu Addukten abreagieren und den Kern (A) daher nicht verlassen.

Die dem Bindemittel (B) zugesetzte Menge des Monomerenfängers (E) liegt, in Abhängigkeit von der Art des Monomerenfängers (E) zwischen 0,1 bis 5 Gew.-%, vorzugsweise zwischen 0, 5 bis 2 Gew.-%, besonders bevorzugt zwischen 1,0 bis 1,5 Gew.-%, bezogen auf die eingesetzte Mischung aus Bindemittel (B) und Monomerenfänger (E). Der flüssige Monomerenfänger (E) wird vorzugsweise mit dem flüssigen Bindemittel (B) vermischt und in dieser flüssigen Form auf den Schaumstoff oder das faserige Material des Kerns aufgebracht.

Im Kern (A) ist die Temperatur beim Härten niedriger, so dass dort vorzugsweise ein Katalysator eingebracht wird um die Wirkung des Monomerenfängers (E) im Kern (A) sicherzustellen. Vorzugsweise wird ein Katalysator zugefügt, der in der Lage ist, die thermische Zersetzung des Bindemittels (B) und/oder die Entfernung des freigesetzten Monomers, insbesondere des Formaldehyds zu erleichtern und/oder das Aushärten des Bindemittels (B) zu beschleunigen.

Geeignete Katalysatoren sind Ammoniumsalze, wie Ammoniumchlorid oder -sulfat oder Lewis-Säuren, u. a. bekannte, hierfür geeignete Katalysatoren.

Der Katalysator kann in fester oder flüssiger Form zugegeben werden und eine homogene oder heterogene Mischung mit dem Monomerenfänger (E) bilden. Vorzugsweise verwendet man Partikel, auf deren Oberfläche der Katalysator in fester Form aufgebracht ist. Zu diesem Zweck wird der Katalysator z. B. dem Harnstoff in vorteilhafter Weise in Pulverform gleichmäßig zugemischt. Der Katalysator haftet dabei aufgrund der Hygroskopizität des Harnstoffes an dessen Oberfläche. Der Katalysator kann jedoch auch durch Benetzen der Partikel mit einer Lösung oder Suspension des Katalysators aufgebracht werden. Anschließend wird gegebenenfalls getrocknet.

Es ist aber auch möglich, den Katalysator bereits bei der Herstellung des Monomerenfängers (E), z. B. der Harnstoffschmelze, vor der Erstarrung und Granulierung oder aber während des Granuliervorgangs beizumischen oder aber den Katalysator auf die Partikel aufzusprühen.

Vorzugsweise verwendet man einen Katalysator, der die Schmelztemperatur des reinen Formaldehydfängers herabsetzt. Die Menge an Katalysator liegt im Allgemeinen im Bereich von 0,1 bis 15%, vorzugsweise von 5 bis 10%, bezogen auf die Menge an Monomerenfänger (E).

Durch das erfindungsgemäße Verfahren konnten die bei der Herstellung der Formteile in der Umgebungsluft gemessenen Monomer-/Formaldehydkonzentrationen um mehr als 50 % reduziert werden.

Die erfindungsgemäßen vliesbeschichteten Formteile finden üblicherweise Verwendung als Verkleidungen oder thermischen oder akustischen Dämm- und Isolationsmaterialien. Sie können daher insbesondere zur Verkleidung von Maschinenräumen, Industrieanlagen, Motor- oder Innenräumen von Kraftfahrzeugen, Flugzeugen oder Schiffen verwendet werden. Besonders bevorzugt werden die erfindungsgemäßen vliesbeschichteten Formteile als Absorberteile in Kraftfahrzeugen eingesetzt.

Die nachfolgenden Beispiele erläutern die Erfindung, ohne sie auf die Beispiele zu beschränken. Die einzelnen Merkmale der Ausführungsbeispiele können im Rahmen des technisch sinnvollen beliebig miteinander kombiniert werden, ohne den Gegenstand der Erfindung zu verlassen.

Ein mögliches Verfahren zur Herstellung eines erfindungsgemäßen Formteils weist folgenden Verfahrensablauf auf:

In einem ersten Schritt wird ein Verbund aus einem bandförmigen PE-Vlies mit einer Materialstärke von Bruchteilen eines Millimeters bis zu mehreren Millimetern und einer Duplofolie hergestellt, die unter Verwendung eines Hot-Melt-Klebepulvers mechanisch aneinander angeheftet werden. Unter einer Duplofolie ist dabei eine zweilagige Folie zu verstehen, die eine erste Lage aus PA 6.6 mit einer Materialstärke von einigen Mikrometern und eine zweite Lage mit einer Materialstärke von einigen Mikrometern aus einem thermoplastischen Kunststoff umfasst, die mechanisch fest miteinander verbunden sind, z.B. durch Koextrusion. Die Lage aus PA 6.6 ist dabei zum Vlies hin orientiert. Die Anheftung der Duplofolie wird über ein kurzzeitiges thermisches Aufschmelzen der thermoplastischen Komponente im nachfolgend beschriebenen Hot-Melt-Klebepulver realisiert.

Das Hot-Melt-Klebepulver wird vor dem Aufbringen auf das Vlies oder die Duplofolie mit einem in pulvriger Form vorliegenden Monomerenfänger gemäß den vorstehenden Angaben in der Beschreibung vermischt und nachfolgend in einer Menge von etwa 30 bis 250 g pro Quadratmeter aufgestreut, wobei sehr gute Ergebnisse mit einer Menge von etwa 150 g pro Quadratmeter erzielt wurden. Besonders bewährt hat sich dabei der bereits beschriebene Monomerenfänger auf Basis von Stickstoffhaltigen funktionellen Mono- und Polymeren sowie mehrwertigen Alkoholen, die an ein inertes anorganisches Trägermaterial auf Basis von synthetisch hergestellten, oberflächenmodifizierten Sauerstoffhaltigen Siliziumverbindungen gebunden sind. Die Dosierung des Klebepulvers wird bevorzugt so gewählt, dass bei dem nachfolgenden Verfahrensschritt des Formpressens das aufschmelzende Klebepulver in das Vlies eindringt und dieses zumindest teilweise durchsetzt, so dass das Vlies als Folge des Formpressens duroplastisch verstärkt ist. Weiterhin wird die Menge des dem Klebepulver zugesetzten Monomerenfängers bevorzugt so gewählt, dass auch nach dem Formpressen eine ausreichende Menge an aktivem Monomerenfänger verbleibt, so dass das ausgehärtete Klebepulver während der nachfolgenden bestimmungsgemäßen Verwendung des Formteils eine wirksame Schadstoffbarriere für ausdiffundierende Monomere ausbildet.

Im gewählten Ausführungsbeispiel kommt als Kern ein offen- oder gemischtzelliger PU-Schaumstoff in plattenförmigem Zuschnitt mit einer unkomprimierten Materialstärke von typisch 5 bis 25 mm zum Einsatz. Dieser Schaumstoff wird mit einem Melaminharz in wässriger Lösung imprägniert und nachfolgend getrocknet. Der Melaminharzlösung wird bevorzugt ebenfalls ein Monomerenfänger gemäß der vorstehenden Beschreibung beigefügt, der bevorzugt in flüssiger Form vorliegt. Die in die Zellen des Schaumstoffs eingebrachte Menge an Binder und Monomerenfänger liegt typisch zwischen 1 g und 50 g pro Quadratmeter abhängig u.a. von der Materialstärke des PU-Schaums. Bei einer Materialstärke von 10 mm wurden gute Ergebnisse erzielt mit einer eingebrachten Menge von etwa 5 g pro Quadratmeter.

Nachfolgend wird der Vlies-/Folienverbund mit oben liegender Duplofolie mit der Unterseite des imprägnierten PU-Schaumstoffs zusammengeführt.

Oberseitig wird auf den PU-Schaumstoff Hot-Melt-Klebepulver mit beigemischtem pulvrigem Monomerenfänger in einer Dosierung von wiederum 50 g bis 250 g pro Quadratmeter, bevorzugt etwa 150 g pro Quadratmeter, aufgestreut.

Sowohl der flüssige Monomerenfänger, der dem Melaminharz in wässriger Lösung beigemischt wird, als auch der pulvrige Monomerenfänger, der dem Hot-Melt-Klebepulver beigemischt wird, weisen bevorzugt eine besonders hohe Wirksamkeit bei den erhöhten Temperaturen auf, die beim nachfolgend beschriebenen Formpressen im Materialverbund vorliegen.

Dem oberseitig mit Klebepulver bestreuten PU-Schaumstoff wird dann oberseitig ein Band aus PE-Vlies mit den vorgenannten Eigenschaften zugeführt. Dieses Vlies kann, muss aber nicht, mit einer Duplofolie zu einem Materialverbund zusammengefasst sein.

Der so entstehende formprägefertige Materialverbund weist folgende Schichtabfolge auf (von unten):
- PE-Vlies
- Hot-Melt-Klebepulver mit eingemischtem pulvrigem Monomerenfänger
- Duplofolie (PA 6.6 / thermoplastischer Kunststoff)
- Imprägnierter (Harz, Monomerenfänger) PU-Schaumstoff
- Hot-Melt-Klebepulver mit eingemischtem pulvrigem Monomerenfänger
- PE-Vlies

Der entstehende Materialverbund wird nachfolgend durch thermische Anheftung mechanisch miteinander verbunden, d.h. durch Erhitzen werden die thermoplastischen Komponenten in der Duplofolie und im Hot-Melt-Klebepulver angeschmolzen. In diesem (teil-) verflüssigten Zustand dringen sie in die Oberfläche des PU-Schaumstoffs ein. Nachfolgend erstarten die verflüssigten Komponenten wieder, so dass sich eine Anheftung des unterseitigen PE-Vlies / Duplofolienverbunds mit dem PU-Schaumstoff sowie des oberseitigen PE-Vlieses mit dem PU-Schaumstoff ergibt.

Da die oben- und untenliegenden Vliese beide bandförmig sind kann auch der Materialverbund selbst bandförmig sein. Er kann aber auch entsprechend den Abmessungen der PU-Schaumstoffplatten in Abschnitte zerschnitten werden. In beiden Konfektionsformen ist der formprägebereite Materialverbund lagerfähig. Problematisch war hierbei bislang jedoch die hohe Monomerenemission, die von dem gelagerten Materialverbund ausging, da sowohl im Kern aus PU-Schaumstoff als auch im Bereich zwischen PU-Schaumstoff und Vlies eine hohe Monomerkonzentration vorliegt, und die Monomere die Tendenz haben, aus dem Materialverbund auszugasen. Aufgrund der durch die Einbringung von Monomerenfänger in die Schicht des Hot-Melt-Klebepulvers ausgebildeten Schadstoffbarriere weist der erfindungsgemäße Materialverbund jedoch bereits während der Lagerung eine deutlich verringerte Monomeremission auf, was ebenfalls zu einer wesentlichen Verminderung der Schadstoffkonzentration am Arbeitsplatz führt.

Zur Herstellung von Formteilen wird der so hergestellte Materialverbund abschnittweise in die beheizte Form einer Formpresse eingelegt. Die Formpresse weist einen oberen und einen unteren Pressentisch auf, die beide beheizt sind. Auf den Pressentischen sind die unteren und die oberen Werkzeughälften befestigt, die ihrerseits auch beheizt sein können. Durch Regelung der Heizleistung wird die Oberflächentemperatur der die Kavität begrenzenden innenliegenden Oberflächen der Werkzeughälften auf 150 bis 250 °C eingestellt.

Nach dem Einlegen des Materialverbunds in die Kavität des Werkzeugs wird dieses geschlossen und verbleibt über einen Zeitraum von typ. 30 bis 180 sec geschlossen. Die Schließdauer wird so gewählt, dass sowohl das Melaminharz im Kern duroplastisch vernetzt als auch das Hot-Melt-Klebepulver aufschmilzt, in das PE-Vlies eindringt und dieses zumindest teilweise durchsetzt und nachfolgend ebenfalls duroplastisch vernetzt. Aufgrund der hohen Verarbeitungstemperatur tritt während des Formpressvorgangs eine hohe Monomeremission auf, die durch den sowohl in den Binder im PU-Schamstoff als auch in das Hot-Melt-Klebepulver eingebrachten Monomerenfänger deutlich reduziert wird.

Nach Erreichen des gewünschten Vernetzungsgrads wird die Presse erneut geöffnet, das entstandene Formteil entnommen und der nächsten Bearbeitungsstation zugeführt. Hierbei kühlt das Formteil von der Pressentemperatur auf Zimmertemperatur ab, d.h. auch hier träte ohne die erfindungsgemäße Verwendung von Monomerenfänger wegen der hohen Temperaturen im Formteil weiterhin eine hohe Monomerenemission auf, die wiederum durch den sowohl in den Binder im PU-Schamstoff als auch in das Hot-Melt-Klebepulver eingebrachten Monomerenfänger deutlich vermindert wird.

Bei ausreichender Dosierung des Monomerenfängers liegt auch im fertigen Formteil aktiver Monomerenfänger vor, bevorzugt sowohl im PU-Schaum als auch im PE-Vlies. Insbesondere der in das PE-Vlies eingebrachte Monomerenfänger bildet auch in fertigen Formteil eine Schadstoffbarriere aus. Diese bleibt über einen langen Zeitraum hinweg aktiv, so dass ein erfindungsgemäßes Formteil auch bei seiner bestimmungsgemäßen Verwendung z.B. in einem Funktionsraum oder im Innenraum eines Kfz eine insgesamt sehr niedrige Monomerenemission aufgrund residualer Monomere im Binder als auch im Hot-Melt-Klebepulver aufweist.

Bei dem auf die beschriebene Weise hergestellten Formteil kann es sich insbesondere um eine Motorhaubenisolation, eine Getriebe- oder Kardantunnelisolation, eine Ölwannenisolation oder eine Stirnwand für ein Kfz handeln.

Für die Herstellung von Getriebetunnelisolationen aus Glasfasermatten werden bei der Herstellung der Glasfasermatten, die als Ausgangsstoff des Herstellungsverfahrens verwendet werden sollen, vorzugsweise phenolische Bindemittel verwendet, um eine Anfangsfestigkeit zum Handling und eine Duroplastifizierung bei der Produktfertigstellung zu erhalten. Der Sprühlösung zum Imprägnieren der als Kern dienenden Glasfasermatten mit dem Binder sind weiterhin die erfindungsgemäßen Monomerenfänger zugefügt. Die erhaltene Rollen- oder Zuschnittware wird produktspezifisch ein- oder zweiseitig mit Vliesstoff und /oder Aluminiumfolie umhüllt. Die zur Verbundherstellung notwendigen Klebepulver, die in pulvriger Form auf den Vliesstoff und die Aluminiumfolie aufgebracht werden, haben die erfindungsgemäßen Monomerenfänger eingebunden.

## Patentansprüche

1. Vliesbeschichtetes Formteil umfassend einen Kern (A) bestehend aus einem Schaumstoff oder einem faserigen Material, ein wärmeausgehärtetes Bindemittel (B) und wenigstens eine Vliesstoffschicht (C), die mit dem Kern durch ein Hot-Melt-Klebepulver (D), umfassend (i) nicht-vernetzende thermoplastische Füllkörper und (ii) wenigstens eine duroplastisch vernetzende Komponente, verbunden ist, **dadurch gekennzeichnet, dass** das Formteil einen Monomerfänger (E) und/oder das Addukt aus Monomerfänger und Monomer aufweist, wobei der Monomerfänger (E) oder dessen Addukt mit dem Monomer in pulvriger Form im Hot-Melt-Klebepulver (D) enthalten sind, wobei die reaktiven Moleküle des Monomerfängers (E) auf ein festes inertes Trägermaterial aufgebracht sind, und sich der Monomerfänger (E) und/oder das Addukt aus Monomerfänger (E) und Monomer zwischen der Vliesstoffschicht (C) und dem Kern (A) befindet.

2. Vliesbeschichtetes Formteil gemäß Anspruch 1, **dadurch gekennzeichnet, dass** der Kern (A) vor dem thermischen Aushärten mit dem wärmeaushärtbaren Bindemittel (B) versetzt wurde, welches beim Erhitzen duroplastisch vernetzt.

3. Vliesbeschichtetes Formteil gemäß einem der Ansprüche 1 bis 2, **dadurch gekennzeichnet, dass** das wärmeaushärtbare Bindemittel (B) ausgewählt ist aus Phenolharzen, Harnstoffharzen, Formaldehydharzen, Melaminharzen, Epoxidharzen und deren Mischungen.

4. Vliesbeschichtetes Formteil gemäß einem der Ansprüche 1 bis 3, **dadurch gekennzeichnet, dass** der Monomerfänger (E) ausgewählt ist aus der Gruppe bestehend aus Melamin, Dicyandiamid, Thioharnstoff, Dibutylthioharnstoff, Ammoniumcarbonat, Polyacrylsäureamide, Guanidin, Carbamaten mit freien Amidfunktionen, Phenolen, Resorcin oder Diphenylmethandiisocyanat und Harnstoff.

5. Verfahren zur Herstellung eines vliesbeschichteten Formteils gemäß einem der Ansprüche 1 bis 4, **dadurch gekennzeichnet, dass** der Kern (A) mit dem wärmeaushärtenden Bindemittel (B), der Vliesstoffschicht (C), dem thermoplastischen Hot-Melt-Klebepulver (D) und dem Monomerfänger (E) versehen wird und die Bestandteile (A) bis (E) unter Wärmeeinwirkung verpresst werden, wobei das Hot-Melt-Klebepulver (D) und der in pulvriger Form vorliegende Monomerfänger (E), dessen reaktive Moleküle auf ein festes inertes Trägermaterial aufgebracht sind, vor dem Verpressen zwischen Kern (A) und Vliesstoffschicht (C) aufgebracht werden.

6. Verfahren gemäß Anspruch 5, **dadurch gekennzeichnet, dass** das Bindemittel (B) auf die Oberfläche des Kerns (A) aufgebracht wird.

7. Verfahren gemäß einem der Ansprüche 5 oder 6, **dadurch gekennzeichnet, dass** der Kern (A) mit dem Bindemittel (B) imprägniert wird.

8. Verfahren gemäß einem der Ansprüche 5 bis 7, **dadurch gekennzeichnet, dass** die Vliesstoffschicht (C) auf beiden Seiten des Kerns aufgebracht wird.

9. Verfahren gemäß einem der Ansprüche 5 bis 8, **dadurch gekennzeichnet, dass** das Bindemittel (B) in wässriger oder schaumiger Form vorliegt.

10. Verfahren gemäß einem der Ansprüche 5 bis 9, **dadurch gekennzeichnet, dass** das Hot-Melt-Klebepulver (D) und der Monomerfänger (E) miteinander gemischt und vor dem Verpressen auf die Vliesstoffschicht (C) und / oder den Kern (A) aufgebracht werden.

11. Verwendung eines vliesbeschichteten Formteils gemäß einem der Ansprüche 1 bis 4 als akustisch wirksames Absorberteil in Kraftfahrzeugen.

## Claims

1. A moulded part coated with non-woven fabric, comprising a core (A) consisting of a foamed material or a fibrous material, a heat-cured binding agent (B) and at least one non-woven fabric layer (C) connected to the core by means of a hot-melt adhesive powder (D) comprising (i) non-cross-linking thermoplastic filling bodies and (ii) at least one duroplastically cross-linking component, **characterised in that** the moulded part has a monomer scavenger (E) and/or the adduct of a monomer scavenger and a monomer, wherein the monomer scavenger (E) or the adduct thereof with the monomer are contained in the hot-melt adhesive powder (D) in the form of powder, wherein the reactive molecules of the monomer scavenger (E) are applied to a solid inert substrate material, and the monomer scavenger (E) and/or the adduct of the monomer scavenger (E) and the monomer is located between the non-woven fabric layer (C) and the core (A).

2. The moulded part coated with non-woven fabric according to claim 1, **characterised in that** the heat-curable binding agent (B), which crosslinks duroplastically during heating, was added to the core (A) prior to thermal curing.

3. The moulded part coated with non-woven fabric according to any one of the claims 1 to 2, **characterised in that** the heat-curable binding agent (B) is selected from phenolic resins, urea resins, formaldehyde resins, melamine resins, epoxy resins and mixtures thereof.

4. The moulded part coated with non-woven fabric according to any one of the claims 1 to 3, **characterised in that** the monomer scavenger (E) is selected from the group consisting of melamine, dicyandiamide, thiourea, dibutylthiourea, ammonium carbonate, polyacrylamides, guanidine, carbamates with free amide functions, phenols, resorcinol or diphenylmethane diisocyanate and urea.

5. A method for producing a moulded part coated with non-woven fabric according to any one of the claims 1 to 4, **characterised in that** the core (A) is provided with the heat-curing binding agent (B), the non-woven fabric layer (C), the thermoplastic hot-melt adhesive powder (D) and the monomer scavenger (E), and the constituents (A) to (E) are pressed while being subjected to heat, wherein the hot-melt adhesive powder (D) and the monomer scavenger (E), which is provided in the form of powder and whose reactive molecules are applied to a solid inert substrate material, are applied between the core (A) and the non-woven fabric layer (C) prior to pressing.

6. The method according to claim 5, **characterised in that** the binding agent (B) is applied to the surface of the core (A).

7. The method according to any one of the claims 5 or 6, **characterised in that** the core (A) is impregnated with the binding agent (B).

8. The method according to any one of the claims 5 to 7, **characterised in that** the non-woven fabric layer (C) is applied to both sides of the core.

9. The method according to any one of the claims 5 to 8, **characterised in that** the binding agent (B) is present in an aqueous or foamy form.

10. The method according to any one of the claims 5 to 9, **characterised in that** the hot-melt adhesive powder (D) and the monomer scavenger (E) are mixed with each other and applied to non-woven fabric layer (C) and/or the core prior to pressing.

11. Use of a moulded part coated with non-woven fabric according to any one of the claims 1 to 4 as an acoustically effective absorber part in motor vehicles.

## Revendications

1. Pièce moulée revêtue de non-tissé, comprenant un noyau (A) se composant d'une mousse ou d'une matière fibreuse, un liant thermodurci (B) et au moins une couche en non-tissé (C) qui est reliée au noyau par une poudre adhésive hot melt (D) comprenant (i) des corps de remplissage thermoplastiques non réticulants et (ii) au moins un composant à réticulation thermodurcissable, **caractérisée par le fait que** ladite pièce moulée présente un piégeur de monomères (E) et/ou le produit d'addition de piégeur de monomères et monomère, le piégeur de monomères (E) ou son produit d'addition avec le monomère étant contenus sous forme pulvérulente dans la poudre adhésive hot melt (D), les molécules réactives du piégeur de monomères (E) étant appliquées sur une matière support inerte solide, et le piégeur de monomères (E) et/ou le produit d'addition de piégeur de monomères (E) et monomère se trouvant entre la couche en non-tissé (C) et le noyau (A).

2. Pièce moulée revêtue de non-tissé selon la revendication 1, **caractérisée par le fait que**, avant le thermodurcissement, le noyau (A) a été mélangé avec le liant thermodurcissable (B) qui est réticulé de façon thermodurcissable lors du chauffage.

3. Pièce moulée revêtue de non-tissé selon l'une quelconque des revendications 1 à 2, **caractérisée par le fait que** le liant thermodurcissable (B) est choisi dans les résines phénoliques, les résines d'urée, les résines formaldéhyde, les résines mélaminiques, les résines époxyde et leurs mélanges.

4. Pièce moulée revêtue de non-tissé selon l'une quelconque des revendications 1 à 3, **caractérisée par le fait que** le piégeur de monomères (E) est choisi dans le groupe constitué par la mélamine, le dicyandiamide, la thiourée, la dibutylthiourée, le carbonate d'ammonium, les amides de l'acide polyacrylique, la guanidine, les carbamates à fonctions amide indépendantes, les phénols, la résorcine ou le diisocyanate de diphénylméthane et l'urée.

5. Procédé de production d'une pièce moulée revêtue de non-tissé selon l'une quelconque des revendications 1 à 4, **caractérisé par le fait que** le noyau (A) est pourvu du liant thermodurcissable (B), de la couche en non-tissé (C), de la poudre adhésive hot melt (D) et du piégeur de monomères (E) et que les composants (A) à (E) sont comprimés sous l'action de la chaleur, la poudre adhésive hot melt (D) et le piégeur de monomères (E) se présentant sous forme pulvérulente dont les molécules réactives sont appliquées sur une matière support inerte solide sont appliqués entre le noyau (A) et la couche en non-tissé (C) avant la compression.

6. Procédé selon la revendication 5, **caractérisé par le fait que** le liant (B) est appliqué sur la surface du noyau (A).

7. Procédé selon l'une quelconque des revendications 5 ou 6, **caractérisé par le fait que** le noyau (A) est imprégné du liant (B).

8. Procédé selon l'une quelconque des revendications 5 à 7, **caractérisé par le fait que** la couche en non-tissé (C) est appliquée sur les deux faces du noyau.

9. Procédé selon l'une quelconque des revendications 5 à 8, **caractérisé par le fait que** le liant (B) se présente sous forme aqueuse ou mousseuse.

10. Procédé selon l'une quelconque des revendications 5 à 9, **caractérisé par le fait que** la poudre adhésive hot melt (D) et le piégeur de monomères (C) sont mélangés l'un avec l'autre et sont appliqués, avant la compression, sur la couche en non-tissé (C) et/ou le noyau (A).

11. Utilisation d'une pièce moulée revêtue de non-tissé selon l'une quelconque des revendications 1 à 4, en tant qu'élément absorbeur à efficacité acoustique dans des véhicules automobiles.
